# FASCICULE DE BREVET EUROPEEN

(11) **EP 2 870 323 B1**
(45) Date de publication et mention de la délivrance du brevet: **11.10.2017**
(21) Numéro de dépôt: 13744687.8
(22) Date de dépôt: 04.07.2013
(51) Int. Cl.: F01D 11/00, F16J 15/00, F16J 15/32, F16J 15/44, F16J 15/447

(54) **DISPOSITIF DE JOINT D'ETANCHEITE DE PALIER DE TURBOMACHINE AVEC DEUX JOINTS ELASTIQUES**
DICHTUNGSVORRICHTUNG FÜR DAS LAGER EINER TURBOMASCHINE MIT ZWEI ELASTISCHEN DICHTUNGEN
GASKET DEVICE FOR THE BEARING OF A TURBOMACHINE, COMPRISING TWO ELASTIC SEALS

(30) Priorité: 06.07.2012 FR 1256544
(43) Date de publication de la demande: 13.05.2015
(73) Titulaire: Snecma, 75015 Paris (FR)
(72) Inventeur: BAPTISTA, Jonathan, Boris, F-77550 Moissy-Cramayel Cedex (FR)
(74) Mandataire: Brevalex
(86) Numéro de dépôt international: PCT/FR2013/051591
(87) Numéro de publication internationale: WO 2014/006338

(56) Documents cités:
- EP-A1- 2 410 134
- WO-A2-2012/022550

## Description

### DOMAINE TECHNIQUE

La présente invention se rapporte au domaine des turbomachines. Elle concerne un dispositif de joint d'étanchéité de palier de turbomachine, ainsi que la turbomachine comportant un tel dispositif.

L'invention s'applique à tout type de turbomachines terrestres ou aéronautiques, et notamment aux turbomachines d'aéronef telles que les turboréacteurs et les turbopropulseurs. Plus préférentiellement, l'invention s'applique à un turboréacteur double corps et double flux.

### ÉTAT DE LA TECHNIQUE ANTÉRIEURE

De façon classique, un palier de turbomachine supportant un arbre tournant à l'intérieur d'un carter fixe comporte un roulement disposé dans une enceinte où sa lubrification est assurée. Toutefois, toute migration d'huile doit être évitée vers certains compartiments de la turbomachine et l'étanchéité doit ainsi être assurée à la séparation entre l'enceinte de palier contenant de l'huile et une enceinte voisine à l'air qui doit être maintenue exempte d'huile.

Plusieurs solutions ont déjà été proposées dans ce but, utilisant par exemple des joints d'étanchéité segmentés en carbone associés à diverses modalités de mise en place.

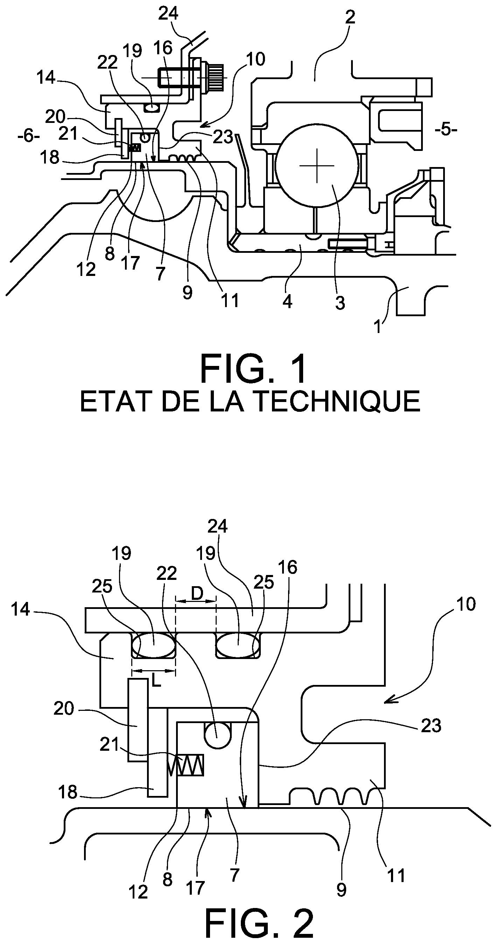

La figure 1 illustre un exemple d'utilisation d'un tel joint d'étanchéité segmenté, appelé encore joint radial segmenté (JRS), comportant en particulier un anneau d'étanchéité statique constitué de segments de carbone. Sur cette figure, un arbre 1 est supporté en rotation par un palier, porté par un carter 2, comportant un roulement 3. Un manchon 4 solidarisé en rotation à l'arbre 1 est interposé entre le roulement 3 et l'arbre 1, suivant des dispositions connues en soi dans l'application aux turbomachines. Le roulement 3 est compris dans une enceinte 5 où sont présents à la fois de l'air et de l'huile en vue de la lubrification du roulement 3 assurée de manière connue en soi.

Au-delà du palier de support, l'arbre 1 est entouré d'une enceinte 6 dite à air et qui doit rester exempte d'huile car toute remontée d'huile dans certains compartiments de la turbomachine serait préjudiciable à un bon fonctionnement. Un dispositif d'étanchéité 10 est ainsi disposé entre l'arbre 1 et le carter 2 à la séparation entre l'enceinte à huile 5 et l'enceinte à air 6.

Le dispositif d'étanchéité 10 comporte un anneau d'étanchéité statique 7, constitué de segments de carbone qui sont maintenus ensemble à l'aide d'un ressort circonférentiel 22, ce ressort 22 serrant les segments de carbone contre le manchon 4. L'anneau d'étanchéité statique 7 est associé à une surface tournante 8, pouvant comporter des rainures 12 pour créer de la portance. Cette surface tournante 8 se prolonge par une surface cylindrique 9, en relation avec un système de refoulement d'huile à labyrinthe 11 pour éviter l'arrivée de particules d'huile sur les segments de carbone.

L'anneau d'étanchéité statique 7 est maintenu dans une enveloppe de support 14 métallique (ou support 14) par le ressort circonférentiel 22 et des ressorts axiaux 21, appuyés sur un anneau 18 qui est maintenu dans le support 14 par un joint d'arrêt 20. Le support 14 est centré sans serrage au moyen d'un joint torique 19 placé entre le support 14 et un élément de carter 24 faisant office de couvercle et permettant ainsi la fixation de la partie statique du dispositif de joint d'étanchéité 10 sur le carter 2 de la turbomachine.

L'étanchéité dynamique est réalisée entre les faces cylindriques coopérantes respectives 16 et 17 des segments de carbone 7 et de la surface tournante 8. L'étanchéité statique est réalisée entre les segments de carbone 7 et la face statique 23 du support 14, située au niveau de l'anneau de refoulement d'huile à labyrinthe 11, pour éviter toute fuite radiale. Aussi, pour parvenir à assurer une étanchéité dynamique et une étanchéité statique satisfaisantes, l'anneau d'étanchéité statique 7 doit être monté de sorte à conserver en fonctionnement une concentricité élevée par rapport au rotor et une perpendicularité par rapport à la face statique 23.

Cependant, les montages connus de l'art antérieur, comme celui décrit en référence à la figure 1, pour un joint d'étanchéité segmenté sont généralement insuffisants pour répondre à ces besoins, notamment pour les applications visées par la présente invention. En particulier, l'étanchéité peut être difficile à réaliser en fonctionnement étant donné que le matériau choisi pour le support 14, à savoir en général de l'acier du fait de contraintes tribologiques, se dilate sensiblement moitié moins que celui choisi pour l'élément de carter 24, à savoir en général de l'aluminium pour les moteurs les plus récents. De la sorte, il peut arriver qu'un mouvement de rotule se crée autour du joint torique 19 qui, en détériorant le contact entre les surfaces frottantes, augmente l'ouverture de jeu radial et diminuant l'efficacité de l'étanchéité ainsi réalisée.

Par ailleurs, la demande internationale WO 2012/022550 A2 décrit un autre exemple de dispositif d'étanchéité, placé entre deux parties d'un turbocompresseur, permettant de réaliser une séparation entre deux enceintes sous des pressions différentes, et la demande de brevet EP 2 410 134 A1 enseigne également l'utilisation d'un dispositif d'étanchéité dans une turbomachine.

### EXPOSÉ DE L'INVENTION

Il existe ainsi un besoin pour proposer un nouveau montage d'un joint d'étanchéité segmenté d'un dispositif de joint d'étanchéité de palier de turbomachine, permettant d'améliorer l'étanchéité du dispositif en fonctionnement. Il existe notamment un besoin pour concevoir un montage d'un joint d'étanchéité segmenté qui soit adapté aux contraintes existantes sur le choix des matériaux des constituants d'une turbomachine.

L'invention a pour but de remédier au moins partiellement aux besoins mentionnés ci-dessus et aux inconvénients relatifs aux réalisations de l'art antérieur.

L'invention a ainsi pour objet, selon l'un de ses aspects, une turbomachine comportant un dispositif de joint d'étanchéité de palier de turbomachine à deux joints élastiques. Ledit palier comporte un roulement monté entre un manchon solidaire d'un arbre et un carter. Le manchon présente une surface tournante et le carter comporte un élément de carter faisant office de couvercle pour le dispositif de joint d'étanchéité. Le dispositif de joint d'étanchéité est apte à séparer une enceinte à huile du roulement et une enceinte à air de la turbomachine. Il comporte :
- un joint d'étanchéité segmenté, comportant en particulier un ou des segments de carbone, monté en association avec la surface tournante du manchon, pour assurer notamment l'étanchéité principale du dispositif,
- une enveloppe de support pour maintenir le joint d'étanchéité segmenté, montée entre le manchon et l'élément de carter, l'enveloppe de support comportant une première gorge logeant un premier joint élastique pour le centrage de l'enveloppe de support sur l'élément de carter, en particulier pour l'alignement de l'axe de l'enveloppe de support avec l'axe de l'élément de carter.

La turbomachine est caractérisé en ce que l'enveloppe de support comporte une deuxième gorge logeant un deuxième joint élastique pour le centrage de l'enveloppe de support sur l'élément de carter, en ce que la surface tournante du manchon se prolonge par une surface cylindriqe, et en ce que l'enveloppe de support comporte un système de refoulement d'huile à labyrinthe en relation avec la surface cylindrique.

La solution proposée par l'invention peut permettre d'éviter les divers inconvénients des solutions connues de l'art antérieur tout en assurant l'étanchéité recherchée entre une enceinte à air et une enceinte à huile. Grâce à l'invention, il peut par exemple être possible de surmonter les difficultés relatives à l'ouverture de jeu radial du fait des différences existantes entre les matériaux des constituants de la turbomachine en termes de dilatation. De plus, le centrage de l'enveloppe de support sur l'élément de carter par l'intermédiaire de deux joints élastiques peut permettre d'amortir les vibrations du carter, et ainsi de réduire l'usure axiale des segments de carbone du joint d'étanchéité segmenté.

La turbomachine selon l'invention peut en outre comporter l'une ou plusieurs des caractéristiques suivantes prises isolément ou suivant toutes combinaisons techniques possibles.

Les première et deuxième gorges peuvent être identiques, présentant notamment les mêmes dimensions et la même forme.

Les première et deuxième gorges sont avantageusement formées sur la partie de l'enveloppe de support située en regard de l'élément de carter.

L'enveloppe de support peut comporter plus de deux gorges logeant chacune un joint élastique pour le centrage de l'enveloppe de support sur l'élément de carter, notamment au moins trois, au moins quatre, voire cinq gorges logeant chacune un joint élastique.

Les premier et deuxième joints élastiques peuvent présenter les mêmes dimensions. En particulier, les premier et deuxième joints élastiques peuvent présenter le même diamètre.

Les premier et deuxième joints élastiques viennent avantageusement au contact de l'élément de carter.

Les premier et deuxième joints élastiques peuvent être de tout type, étant notamment des joints toriques.

Les premier et deuxième joints élastiques peuvent être choisis de sorte que l'ouverture de jeu radial maximale entre l'élément de carter et les joints élastiques, en fonctionnement de la turbomachine, soit comprise dans le domaine des valeurs minimale et maximale acceptables du fait de contraintes de conception pour l'écrasement d'un joint élastique, en particulier un joint torique. Les premier et deuxième joints élastiques peuvent être installés lors du montage du dispositif de joint d'étanchéité avec la valeur maximale acceptable d'écrasement.

Les première et deuxième gorges peuvent être espacées l'une de l'autre d'une distance supérieure, inférieure ou égale à la largeur d'au moins une des première et deuxième gorges, notamment à la largeur de chacune des première et deuxième gorge.

L'espacement entre les première et deuxième gorges peut être maximal pour rendre le centrage de l'enveloppe de support sur l'élément de carter optimal.

Les premier et deuxième joints élastiques peuvent être réalisés en tout type de matériau élastique, notamment en un matériau élastomère.

Le joint d'étanchéité segmenté peut comporter un anneau d'étanchéité comportant un ensemble d'un ou plusieurs segments de carbone, pouvant être maintenus ensemble par un ressort circonférentiel et/ou appuyés sur l'enveloppe de support par un ou des ressorts axiaux en appui sur un joint d'arrêt, notamment un anneau d'arrêt (du type JRS ou joints faciaux).

### BRÈVE DESCRIPTION DES DESSINS

L'invention pourra être mieux comprise à la lecture de la description détaillée qui va suivre, d'un exemple de mise en oeuvre non limitatif de celle-ci, ainsi qu'à l'examen des figures, schématiques et partielles, du dessin annexé, sur lequel :
- la figure 1 représente, selon une vue en coupe par un plan passant par l'axe de rotation de l'arbre, une partie de palier de turbomachine comportant un dispositif de joint d'étanchéité d'enceinte selon l'art antérieur, et
- la figure 2 représente une vue agrandie d'un palier de turbomachine semblable à celui de la figure 1, comportant toutefois un dispositif de joint d'étanchéité d'une turbomachine selon l'invention.

Dans l'ensemble de ces figures, des références identiques peuvent désigner des éléments identiques ou analogues.

De plus, les différentes parties représentées sur les figures ne le sont pas nécessairement selon une échelle uniforme, pour rendre les figures plus lisibles.

### EXPOSÉ DÉTAILLÉ D'UN MODE DE RÉALISATION PARTICULIER

Il va être décrit ci-après, en référence à la figure 2, un exemple de réalisation de l'invention se rapportant à un dispositif de joint d'étanchéité 10 de palier de turbomachine.

Le palier de turbomachine est semblable à celui décrit en référence à la figure 1.

Ainsi, le palier comporte un roulement 3 monté entre un manchon 4 solidaire d'un arbre 1 et un carter 2, le manchon 4 présentant une surface tournante 8 et le carter 2 comportant un élément de carter 24 faisant office de couvercle pour le dispositif de joint d'étanchéité 10. Le dispositif de joint d'étanchéité 10 est apte à séparer une enceinte à huile 5 du roulement 3 et une enceinte à air 6 de la turbomachine.

En revanche, le dispositif d'étanchéité 10 représenté sur la figure 2 diffère de celui représenté sur la figure 1 en ce qu'il comporte une enveloppe de support 14 comportant deux logements 25 logeant chacun un joint élastique 19, conformément à l'invention.

Plus précisément, le dispositif de joint d'étanchéité 10 comporte un joint d'étanchéité segmenté 7, constitué d'un anneau d'étanchéité statique de segments de carbone maintenus ensemble par un ressort circonférentiel 22, qui est monté en association avec la surface tournante 8 du manchon 4 pour assurer l'étanchéité principale du dispositif de joint d'étanchéité 10. Ce dernier comporte également une enveloppe de support 14 (ou support 14) pour maintenir le joint d'étanchéité segmenté 7, ce support 14 étant monté entre le manchon 4 et l'élément de carter 24.

Le support 14 comporte des première et deuxième gorges 25 logeant respectivement des premier et deuxième joints élastiques 19 permettent le centrage du support 14 sur l'élément de carter 24.

De préférence, comme représenté sur la figure 2, les première et deuxième gorges 25 peuvent être identiques et les premier et deuxième joints élastiques 19 peuvent être des joints toriques de même diamètre, réalisés en un matériau élastomère.

Afin d'obtenir un centrage optimal, c'est-à-dire un alignement optimal de l'axe du support 14 avec l'axe de l'élément de carter 24, les deux joints toriques 19 peuvent être écartés l'un de l'autre le plus possible. Autrement dit, la distance D qui sépare les première et deuxième gorges 25 peut être la plus grande possible, étant notamment supérieure ou égal à la largeur L des première et deuxième gorges 25.

Le centrage du support 14 sur l'élément de carter 24 peut être facilité, et même être réalisé à froid, le support 14 pouvant par exemple être monté dans son alésage selon l'ajustement H7g6 défini par le système ISO d'ajustements.

Bien entendu, l'invention n'est pas limitée à l'exemple de réalisation qui vient d'être décrit. Diverses modifications peuvent y être apportées par l'homme du métier.

En particulier, le support 14 pourrait comporter plus de deux gorges 25 associées chacune à un joint élastique 19. Les gorges 25 et/ou les joints élastiques 19 peuvent être ou non identiques.

L'expression « comportant un » doit être comprise comme étant synonyme de « comportant au moins un », sauf si le contraire est spécifié.

## Revendications

1. Turbomachine comportant un dispositif de joint d'étanchéité (10) de palier de turbomachine, ledit palier comportant un roulement (3) monté entre un manchon (4) solidaire d'un arbre (1) et un carter (2), le manchon (4) présentant une surface tournante (8) et le carter (2) comportant un élément de carter (24) faisant office de couvercle pour le dispositif de joint d'étanchéité (10), le dispositif de joint d'étanchéité (10) étant apte à séparer une enceinte à huile (5) du roulement (3) et une enceinte à air (6) de la turbomachine, le dispositif de joint d'étanchéité (10) comportant :
- un joint d'étanchéité segmenté (7), monté en association avec la surface tournante (8) du manchon (4), pour assurer l'étanchéité principale du dispositif (10),
- une enveloppe de support (14) pour maintenir le joint d'étanchéité segmenté (7), montée entre le manchon (4) et l'élément de carter (24), l'enveloppe de support (14) comportant une première gorge (25) logeant un premier joint élastique (19) pour le centrage de l'enveloppe de support (14) sur l'élément de carter (24),
**caractérisé en ce que** l'enveloppe de support (14) comporte une deuxième gorge (25) logeant un deuxième joint élastique (19) pour le centrage de l'enveloppe de support (14) sur l'élément de carter (24), **en ce que** la surface tournante (8) du manchon (4) se prolonge par une surface cylindrique (9), et **en ce que** l'enveloppe de support (14) comporte un système de refoulement d'huile à labyrinthe (11) en relation avec la surface cylindrique (9).

2. Turbomachine selon la revendication 1, **caractérisé en ce que** les première et deuxième gorges (25) sont identiques.

3. Turbomachine selon la revendication 1 ou 2, **caractérisé en ce que** les premier et deuxième joints élastiques (19) présentent les mêmes dimensions, notamment le même diamètre.

4. Turbomachine selon l'une des revendications précédentes, **caractérisé en ce que** les premier et deuxième joints élastiques (19) sont des joints toriques.

5. Turbomachine selon l'une quelconque des revendications précédentes, **caractérisé en ce que** les première et deuxième gorges (25) sont espacées l'une de l'autre d'une distance (D) supérieure ou égale à la largeur (L) d'au moins une des première et deuxième gorges (25).

6. Turbomachine selon l'une quelconque des revendications précédentes, **caractérisé en ce que** les premier et deuxième joints élastiques (19) sont réalisés en un matériau élastomère.

7. Turbomachine selon l'une quelconque des revendications précédentes, **caractérisé en ce que** le joint d'étanchéité segmenté (7) comporte un anneau d'étanchéité comportant un ensemble d'un ou plusieurs segments de carbone.

8. Turbomachine selon la revendication précédente, **caractérisé en ce que** le ou les segments de carbone sont maintenus ensemble par un ressort circonférentiel (22) et/ou appuyés sur l'enveloppe de support (14) par un ou des ressorts axiaux (21) en appui sur un joint d'arrêt (20).

## Patentansprüche

1. Turbomaschine mit einer Dichtungsvorrichtung (10) für ein Lager einer Turbomaschine, wobei dieses Lager ein Wälzlager (3) umfasst, das zwischen einer mit einer Welle (1) fest verbundenen Hülse (4) und einem Gehäuse (2) eingebaut ist, wobei die Hülse (4) eine drehende Oberfläche (8) aufweist und das Gehäuse (2) ein Gehäuseelement (24) enthält, das als Deckel für die Dichtungsvorrichtung (10) dient, wobei die Dichtungsvorrichtung (10) geeignet ist, einen abgeschlossenen Ölraum (5) des Wälzlagers (3) und einen abgeschlossenen Luftraum (6) der Turbomaschine voneinander zu trennen, wobei die Dichtungsvorrichtung (10) aufweist:
- eine segmentierte Dichtung (7), die in Verbindung mit der drehenden Oberfläche (8) der Hülse (4) eingebaut ist, um die Grunddichtigkeit der Vorrichtung (10) zu gewährleisten,
- eine Tragummantelung (14) zum Halten der segmentierten Dichtung (7), welche zwischen der Hülse (4) und dem Gehäuseelement (24) eingebaut ist, wobei die Tragummantelung (14) eine erste Auskehlung (25) enthält, in der eine erste elastische Dichtung (19) Aufnahme findet, und zwar für die Zentrierung der Tragummantelung (14) auf dem Gehäuseelement (24),
**dadurch gekennzeichnet,**
**dass** die Tragummantelung (14) eine zweite Auskehlung (25) enthält, in der eine zweite elastische Dichtung (19) Aufnahme findet, und zwar für die Zentrierung der Tragummantelung (14) auf dem Gehäuseelement (24),
**dass** die drehende Oberfläche (8) der Hülse (4) sich in einer zylindrischen Oberfläche (9) fortsetzt, und
**dass** die Tragummantelung (14) ein Labyrinthölfördersystem (11) in Verbindung mit der zylindrischen Oberfläche (9) enthält.

2. Turbomaschine nach Anspruch 1,
**dadurch gekennzeichnet,**
**dass** die erste und die zweite Auskehlung (25) gleich sind.

3. Turbomaschine nach Anspruch 1 oder 2,
**dadurch gekennzeichnet,**
**dass** die erste und die zweite Dichtung (19) die gleichen Abmessungen aufweisen, insbesondere den gleichen Durchmesser.

4. Turbomaschine nach einem der vorherigen Ansprüche,
**dadurch gekennzeichnet,**
**dass** die erste und die zweite Dichtung (19) Runddichtringe sind.

5. Turbomaschine nach einem der vorherigen Ansprüche,
**dadurch gekennzeichnet,**
**dass** die erste und die zweite Auskehlung (25) um eine Distanz (D) voneinander beanstandet sind, die größer als oder gleich der Breite (L) von wenigstens einer unter der ersten und der zweiten Auskehlung (25) sind.

6. Turbomaschine nach einem der vorherigen Ansprüche,
**dadurch gekennzeichnet,**
**dass** die erste und die zweite Dichtung (19) aus einem Elastomermaterial hergestellt sind.

7. Turbomaschine nach einem der vorherigen Ansprüche,
**dadurch gekennzeichnet,**
**dass** die segmentierte Dichtung (7) einen Dichtring umfasst, der eine Gesamtheit von einem oder mehreren Kohlenstoff-Segmenten aufweist.

8. Turbomaschine nach dem vorherigen Anspruch,
**dadurch gekennzeichnet,**
**dass** die Kohlenstoff-Segmente durch eine Umfangsfeder (22) zusammengehalten werden und /oder durch eine oder mehrere axiale Federn (21), die sich in Anschlag an einer Sperrmuffe (20) befinden, gegen die Tragummantelung (14) gepresst werden.

## Claims

1. Turbomachine comprising a gasket device (10) for a turbomachine bearing, said bearing including a balling bearing (3) mounted between a sleeve (4) integral with a shaft (1) and a case (2), the sleeve (4) having a rotating surface (8) and the case (2) including a case element (24) acting as a cover for the gasket device (10), the gasket device (10) being able to separate an oil enclosure (5) from the balling bearing (3) and an air enclosure (6) from the turbomachine, the gasket device (10) including:
- segmented gasket (7), mounted in association with the rotating surface (8) of the sleeve (4), for providing most of the tightness of the device (10),
- a supporting jacket (14) for holding the segmented gasket (7), which jacket is mounted between the sleeve (4) and the case element (24), the support jacket (14) including a first groove (25) accommodating a first elastic seal (19) for centring the supporting jacket (14) over the case element (24),
**characterised in that** the supporting jacket (14) includes a second groove (25) accommodating a second elastic seal (19) for centring the supporting jacket (14) over the case element (24), **in that** the rotating surface (8) of the sleeve (4) is extended by a cylindrical surface (9), and **in that** the supporting jacket (14) includes a labyrinth oil outlet system (11) in relation with the cylindrical surface (9).

2. The turbomachine according to claim 1, **characterised in that** the first and second grooves (25) are identical.

3. The turbomachine according to claim 1 or 2, **characterised in that** the first and second elastic seals (19) have the same dimensions, in particular the same diameter.

4. The turbomachine according to one of the preceding claims, **characterised in that** the first and second elastic seals (19) are O-rings.

5. The turbomachine according to any of the preceding claims, **characterised in that** the first and second grooves (25) are spaced apart from each other by a distance (D) equal to or higher than the width (W) of at least one of the first and second grooves (25).

6. The turbomachine according to any of the preceding claims, **characterised in that** the first and second elastic seals (19) are made of an elastomeric material.

7. The turbomachine according to any of the preceding claims, **characterised in that** the segmented gasket (7) includes a sealing ring including a set of one or more carbon segments.

8. The turbomachine according to the preceding claim, **characterised in that** the one or more carbon segments are held together by a circumferential spring (22) and/or pressed against the supporting jacket (14) by one or more axial springs (21) pressing on a stop joint (20).
